# EUROPÄISCHE PATENTSCHRIFT

(11) **EP 1 690 390 B1**
(45) Veröffentlichungstag und Bekanntmachung des Hinweises auf die Patenterteilung: **16.10.2013**
(21) Anmeldenummer: 04802819.5
(22) Anmeldetag: 22.11.2004
(51) Int. Cl.: H04L 12/66

(54) **VERFAHREN ZUR ÜBERTRAGUNG VON DATEN ÜBER EINEN DATENBUS SOWIE SYSTEM UND GATEWAY ZUR DURCHFÜHRUNG DES VERFAHRENS**
METHOD FOR TRANSMITTING DATA VIA A DATA BUS AND SYSTEM AND GATEWAY FOR CARRYING OUT SAID METHOD
PROCEDE DE TRANSMISSION DE DONNEES VIA UN BUS DE DONNEES, ET SYSTEME ET PASSERELLE PERMETTANT LA MISE EN OEUVRE DUDIT PROCEDE

(30) Priorität: 04.12.2003 DE 10357422
(43) Veröffentlichungstag der Anmeldung: 16.08.2006
(73) Patentinhaber: Siemens Aktiengesellschaft, 80333 München (DE)
(72) Erfinder: BURGER, Jens, 14624 Dallgow-Döberitz (DE)
(86) Internationale Anmeldenummer: PCT/DE2004/002610
(87) Internationale Veröffentlichungsnummer: WO 2005/055538

(56) Entgegenhaltungen:
- US-A1- 2002 120 369
- US-A1- 2003 037 170
- US-B1- 6 437 692

## Beschreibung

Die Erfindung bezieht sich auf ein Verfahren zur Übertragung von Daten über einen Datenbus.

In dem kommenden Standard IEC 61850 zur Kommunikation in Einrichtungen zur Übertragung von elektrischer Energie ist definiert, wie die Nachrichtenübermittlung zwischen verschiedenen Geräten wie Schutzgeräten, Schaltgeräten, Transformatoren usw. organisiert ist. Ziel dieser Normung ist es, herstellerunabhängig eine einfache Kommunikation verschiedener Geräte zu ermöglichen. Dazu ist es notwendig, die Geräte, welche Daten über einen Datenbus austauschen, der IEC 61850 entsprechend zu konstruieren.

Für vollständig neu aüfzubauende Anlagen bietet es sich an, Geräte auszuwählen, welche gemäß der IEC 61850 arbeiten.

Oftmals ist es jedoch so, dass Netzwerke zur Übertragung elektrischer Energie bereits bestehen. In diesen Netzwerken sind diverse Geräte bereits installiert. Diese Geräte sind teilweise in der Lage, Daten zu generieren bzw. Daten zu senden/empfangen und zu verarbeiten. Die Kompatibilität der einzelnen Geräte untereinander ist jedoch nicht gegeben. Insbesondere bei der Verwendung von Geräten verschiedener Hersteller ist ein Austausch von Daten nur mit erhöhtem individuellen Aufwand möglich.

Aus der US-Patentanmeldung US 2003/0037170 A1 ist ein Verfahren sowie ein System zur Durchführung des Verfahrens bekannt, bei welchem Daten über einen Datenbus übertragen werden. Verschiedene Betriebsmittel sind dabei über einen Datenbus verbunden. Jedem der Betriebsmittel ist jeweils ein Interface zugeordnet, um an den jeweiligen Betriebsmitteln vorliegende Datentelegrammen verschiedener Formate, beispielsweise ein Installationsbus, ein lokales Netzwerk, ein Telefonnetzwerk usw., zu wandeln und normiert in den Datenbus einzuspeisen.

Auch bei einer derartigen Konfiguration ist es nötig, intelligente Betriebsmitteln einzusetzen, welche ihrerseits jeweils individuell normierte Daten übertragen, um diese über den Datenbus untereinander auszutauschen.

Entsprechend ist an jedem Betriebsmittel eine ausreichende Rechenkapazität vorzuhalten, um Datenformate umzuwandeln und zu formieren.

Der vorliegenden Erfindung liegt die Aufgabe zugrunde, ein Verfahren der eingangs genannten Art anzugeben, nach welchem ein Austausch von Daten verschiedener Geräte über einen Datenbus ermöglicht wird.

Die Aufgabe wird bei einem Verfahren der eingangs genannten Art erfindungsgemäß dadurch gelöst, dass von einem ersten Betriebsmittel Daten mittels eines Datentelegramms eines ersten Formates in den Datenbus eingespeist werden, dass das Datentelegramm des ersten Formates von einem Gateway aus dem Datenbus empfangen wird, dass das Gateway das Datentelegramm des ersten Formates in ein Datentelegramm eines zweiten Formates umsetzt und das im zweiten Format vorliegende, umgesetzte Datentelegramm in den Datenbus einspeist.

Als Datenbus kann beispielsweise ein Ethernet-Netz zur Anwendung kommen. Ethernet-Netzwerke können mit bekannter Technik kostengünstig aufgebaut werden. Über das Ethernet sind dann entsprechende Datentelegramme zu verschicken. Diese Datentelegramme können beispielsweise von einem ersten Betriebsmittel erzeugt werden. Ein derartiges erstes Betriebsmittel kann beispielsweise ein Überwachungssensor, wie beispielsweise ein Temperatur- oder Drucksensor, sein. Darüber hinaus können als erstes Betriebsmittel diverse Geräte, wie beispielsweise Schutzgeräte, Steuereinrichtungen, Schaltgeräte, Messwandler, Leistungstransformatoren oder Interfaces, eingesetzt werden. Die Daten geben beispielsweise einen Zustand eines Betriebsmittels wie eine Temperatur wieder. Die Daten werden in Form eines Datentelegramms in das Ethernet eingespeist. Das Gateway setzt das Protokoll- und Datenmodell zwischen den Formaten der Datentelegramme um. Es ist als solches ein Protokollumsetzer.

Das Datentelegramm liegt zunächst in einem ersten Format vor. Im nächsten Schritt wird das Datentelegramm des ersten Formates von einem Gateway aus dem Datenbus empfangen. Dieses Gateway kann beispielsweise ein separates Gerät innerhalb des Ethernets sein. Das Gateway ist beispielsweise eine zentrale funktionale Einheit, welche nicht ausschließlich von dem ersten Betriebsmittel Datentelegramme empfängt. Vorteilhafterweise kann der Gateway auch von weiteren Betriebsmitteln weitere Datentelegramme, beispielsweise des ersten Formates oder auch weiterer Formate, empfangen. Neben einer Ausführung des Gateways als separate funktionale Einheit kann vorgesehen sein, dass das Gateway in einem Betriebsmittel integriert ist. Ein derartiges Betriebsmittel kann beispielsweise eine Leittechnikzentrale sein, welche Daten von vielen Betriebsmitteln empfängt.

Nach dem Empfangen des Datentelegramms des ersten Formates setzt das Gateway das Datentelegramm des ersten Formates in ein Datentelegramm eines zweiten Formates um. Dabei bleibt die Information der im Telegramm enthaltenen Daten erhalten. Es wird lediglich in ein anderes Format umgesetzt. Das nunmehr im zweiten Format vorliegende umgesetzte Datentelegramm wird anschließend in den Datenbus eingespeist. Da über ein- und dasselbe Netzwerk sowohl Datentelegramme des ersten und des zweiten Formates übertragen werden können, entsteht eine kostengünstige Anlagenstruktur, da derselbe Datenbus zur Übertragung verschiedener Formate eingesetzt ist. Ist der Datenbus originär zur Übertragung von Datentelegrammen des zweiten Formates vorgesehen (das zweite Format entspricht den Normen der IEC 61850), erfolgt ein sogenanntes "Tunneln" der Datentelegramme des ersten Formates. Das heißt, dass die Datentelegramme des ersten Formates in den Datenstrom von Telegrammen des zweiten Formates eingetaktet werden. Vorteilhafterweise kann weiterhin vorgesehen sein, dass das nach der Umsetzung in den Datenbus eingespeiste Datentelegramm des zweiten Formates von zumindest einem zweiten Betriebsmittel empfangen und verarbeitet wird.

Das zweite Betriebsmittel kann beispielsweise eine übergeordnete Einrichtung zur Visualisierung des Zustandes eines Energieübertragungsnetzes sein. Das von dem Gateway gesandte Datentelegramm im zweiten Format kann beispielsweise den Spezifikationen der IEC 61850-Norm entsprechen. Ebenso entspricht das zweite Betriebsmittel den Normungen der IEC 61850. Durch die Umsetzung des Datentelegramms von einem ersten, von der Norm IEC 61850 abweichenden Formates in ein zweites, der Norm IEC 61850 entsprechendes Format ist es möglich, in den Energieübertragungsnetzen vorhandene Geräte (die Daten nach verschiedenen Normen austauschen) weiterhin zu verwenden. Über das Ethernetnetzwerk werden dabei im Wesentlichen Datentelegramme des zweiten Formates übertragen. Die vom zweiten Format abweichenden Datentelegramme des ersten Formates werden zusätzlich über den Datenbus übertragen.

Vorteilhafterweise kann weiterhin vorgesehen sein, dass dem ersten Betriebsmittel ein Medienumsetzer zugeordnet ist, welcher eingehende Daten einer Punkt zu Punkt Übertragungsstrecke in ein busfähiges Datentelegramm des ersten Formates umwandelt.

Einige Betriebsmittel empfangen Daten über eine Punkt zu Punkt Übertragungsstrecke. Das heißt, zwischen einem Sender, beispielsweise einem Sensor für eine Temperatur, und einem Empfänger ist ein speziell definierter Datenaustausch vereinbart, wobei eine bestimmte Information immer genau von einem Punkt zu einem anderen Punkt übertragen wird. Eine typische Punkt zu Punkt Übertragung ist beispielsweise eine serielle "RS 232" Übertragung. Derartig übertragene Daten sind von ihrer Struktur her nicht busfähig, das heißt, diese Daten können nicht "intelligent" in einem Datenstrom identifiziert werden. Mittels des Medienumsetzers, welcher dem ersten Betriebsmittel zugeordnet ist, ist es möglich, die durch eine Punkt zu Punkt Übertragung übertragenen Daten in ein busfähiges Datentelegramm umzuwandeln. Der Medienumsetzer konvertiert das physikalische Medium der Daten. Für den Medienumsetzer können dabei preiswerte handelsübliche Baugruppen Verwendung finden. Die von diesen handelsüblichen Baugruppen abgegebenen Datentelegramme sind über einen Ethernetbus übertragbar, jedoch entsprechen diese nicht den IEC 61850 Anforderungen. Oftmals ist es auch so, dass für verschiedene Betriebsmittel verschiedene Medienumsetzer eingesetzt werden, die jeweils ethernetfähige Datentelegramme generieren, welche jedoch wiederum voneinander abweichen. Die von den Medienumsetzern erzeugten busfähigen Datentelegramme können von dem Gateway in ein zweites Format umgewandelt werden. Durch eine zentrale Einrichtung des Gateways ist es möglich, kostengünstig verschiedene Betriebsmittel, welche Datentelegramme abweichend von dem zweiten Format in den Datenbus einspeisen, in eine Kommunikation mit dem zweiten Betriebsmittel einzubinden.

Eine weitere vorteilhafte Ausgestaltung kann vorsehen, dass das Gateway als Server eingerichtet ist.

Der Gateway-Server stellt Daten zur Verfügung und schickt diese bei Bedarf auf einen Datenbus. Bei einer zentralen Ausgestaltung des Gateways ist es so möglich, eine Vielzahl von Clients mit einem einzigen, als Server arbeitenden Gateway anzusprechen.

Dazu kann vorteilhaft vorgesehen sein, dass das zweite Betriebsmittel als Client eingerichtet ist.

Um die für das zweite Betriebsmittel bestimmten Daten auch von dem zweiten Betriebsmittel (Client) empfangen zu können, ist es notwendig, diesen Client zu konfigurieren, so dass definierte Datentelegramme empfangen und verarbeiten werden können. Der Client kann dabei je nach Anforderungen in verschiedenen Weisen eingerichtet werden, so dass er jeweils nur die zur Erfüllung der aktuell anstehenden Aufgabe notwendigen Datentelegramme aus dem Datenstrom des Datenbusses empfängt und verarbeitet. Bei einer Änderung der Aufgabe, beispielsweise einer Änderung der Struktur des elektrischen Energieübertragungsnetzes, können zusätzlich weitere von einem Server gesandte Datentelegramme von dem zweiten Betriebsmittel empfangen und verarbeitet werden. So ist es beispielsweise möglich, bei einer Umrüstung eines Schaltgerätes oder bei einer Netzerweiterung zusätzlich von weiteren Betriebsmitteln gesandte Datentelegramme auch von dem zweiten Betriebsmittel empfangen und verarbeiten zu lassen und bisher verarbeitete Datentelegramme unbeachtet zu lassen.

Eine weitere Aufgabe der Erfindung ist es, einen Datenbus zur Durchführung des Verfahrens anzugeben. Dabei ist vorgesehen, dass der Datenbus Teil einer Einrichtung zur Überwachung und/oder Steuerung einer Energieübertragungsanlage ist.

Eine Energieübertragungsanlage kann beispielsweise ein Elektroenergieübertragungsnetz sein. Derartige Netze weisen eine Vielzahl von Geräten auf. Derartige Geräte sind beispielsweise Messwandler, Schaltgeräte, Leistungstransformatoren, Messwandler, Sensoren, Einrichtungen zur Überwachung von physikalischen Größen usw.. Die Geräte sind von Ferne zu überwachen bzw. auch von Ferne zu betätigen. Dazu sind diese verschiedenen Geräte über einen Datenbus, beispielsweise ein Ethernet, miteinander verbunden.

Weiterhin kann vorgesehen sein, dass ein System einen Datenbus aufweist, in welchen ein erstes Betriebsmittel ein Datentelegramm eines ersten Formates einspeist und dass das System ein Gateway aufweist, welches das Datentelegramm empfängt und in ein Datentelegramm eines zweiten Formates umsetzt und das Datentelegramm des zweiten Formates in den Datenbus einspeist und wobei das Datentelegramm des zweiten Formates von einem zweiten Betriebsmittel empfangen wird.

Ein derartiges System dient beispielsweise der Darstellung eines Abbildes eines Elektroenergieübertragungsnetzes. Ein solches Abbild wird in Leitwarten benötigt um stets aktuell über den Zustand des Elektroenergieübertragungsnetzes informiert zu sein. Von der Leitwarte können auch von Ferne Schalthandlungen, Parametrierungen und ähnliches vorgenommen werden.

Vorteilhafterweise kann weiterhin vorgesehen sein, dass ein Gateway zur Durchführung des oben genannten Verfahrens ein Server ist. Ein derartiges Gateway kann beispielsweise in Form eines elektronischen Rechners, der programmgesteuert arbeitet, ausgeführt sein. Derartige Gateway sind dann leicht konfigurierbar und durch Änderung des Programms an die jeweiligen Erfordernisse anpassbar. Vorteilhafterweise kann dabei vorgesehen sein, dass das Gateway Datentelegramme in einen Datenbus einspeist, welche der IEC-Norm 61850 entsprechen.

Im Folgenden wird die Erfindung anhand eines Ausführungsbeispiel in einer Zeichnung schematisch gezeigt und nachfolgend näher beschrieben.

Dabei zeigt die
- Figur: eine Leittechnikanordnung mit einem ersten Betriebsmittel, einem zweiten Betriebsmittel, einem Medienumsetzer und einem Gateway sowie einem Datenbus.

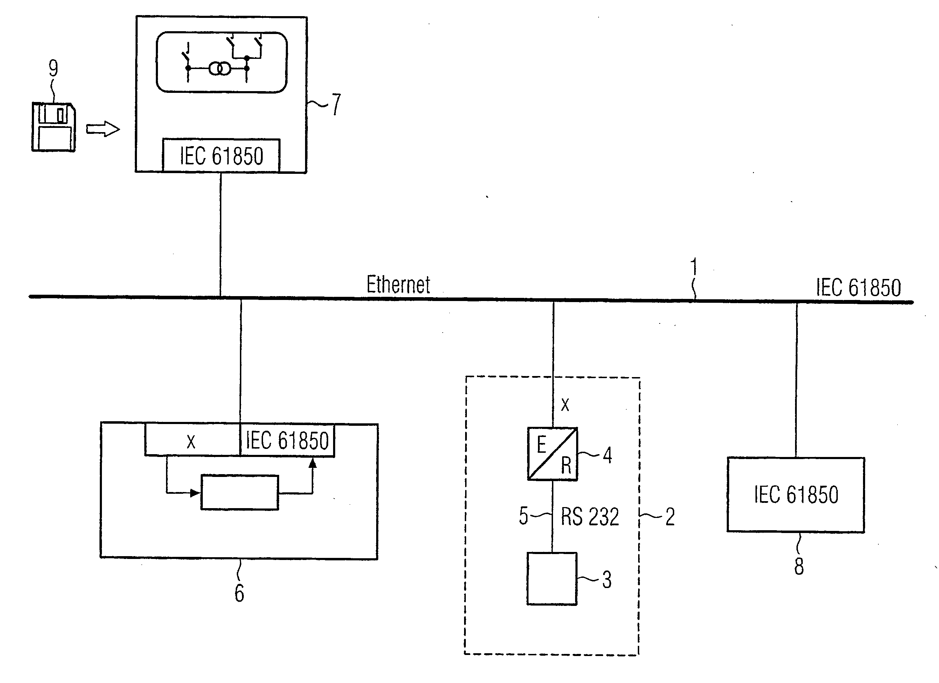

Die Figur zeigt eine Leittechnikanordnung, welche der IEC 61850 entspricht. Die Leittechnikanordnung weist einen Datenbus 1 auf. Der Datenbus 1 ist in Form eines Ethernetnetzwerkes ausgebildet und entspricht der IEC 61850-Architektur. An den Datenbus 1 ist ein erstes Betriebsmittel 2 angeschlossen. Das erste Betriebsmittel 2 entspricht nicht der IEC 61850-Normung. Das erste Betriebsmittel 2 weist eine Datenquelle 3 auf. Die Datenquelle 3 ist beispielsweise ein Temperatursensor zur Überwachung einer Temperatur eines elektrischen Gerätes. Die Datenquelle 3 kommuniziert mit einem Medienumsetzer 4. Der Medienumsetzer 4 und die Datenquelle 3 sind mit einer Punkt zu Punkt Übertragungsstrecke 5 miteinander verbunden. Die Datenquelle 3 sowie der Medienumsetzer 4 können als separate Baueinheiten oder als gemeinsame Baueinheit ausgebildet sein. Die Punkt zu Punkt Übertragungsstrecke 5 ist in Form einer seriellen RS 232-Schnittstelle ausgeführt, das heißt, die von der Datenquelle 3 gesandten Daten sind in einer bestimmten zwischen der Datenquelle 3 und dem Medienumsetzer 4 festgelegten Form übertragbar. Der Medienumsetzer 4 wandelt die von der Datenquelle 3 generierten Daten in ein Datentelegramm eines ersten Formates x um. Das Datentelegramm des ersten Formates x ist busfähig und enthält die Information der über die Punkt zu Punkt Übertragungsstrecke 5 übertragenen Daten. Im vorliegenden Ausführungsbeispiel ist der Medienumsetzer 4 ein Seriell-Ethernet-Medienumsetzer. Das Datentelegramm x des ersten Formates wird in den Datenbus 1 eingespeist. Ein an den Datenbus 1 ebenfalls angeschlossenes Gateway 6 empfängt das für das Gateway adressierte Datentelegramm des ersten Formats x und verarbeitet dieses Datentelegramm. Das Datentelegramm des ersten Formates x wird in ein Datentelegramm eines zweiten Formates umgewandelt. Das Datentelegramm des zweiten Formates entspricht der IEC 61850-Norm. Nach der erfolgten Umsetzung des Datentelegramms von dem ersten Format x in das zweite Format IEC 61850 wird das Datentelegramm in den Datenbus eingespeist. Das Gateway 6 kann beispielsweise als programmgesteuerter Rechner ausgebildet sein, welcher ein separates Gerät darstellt. Das Gateway kann jedoch auch in ein Betriebsmittel integriert sein. Das von dem Gateway 6 abgegebene Datentelegramm des zweiten Formates IEC 61850 wird von einem entsprechenden Betriebsmittel empfangen und verarbeitet. Im vorliegenden Fall ist das entsprechende Betriebsmittel ein zweites Betriebsmittel 7, welches der visuellen Abbildung eines zu überwachenden elektrischen Energieübertragungsnetzes dient. Damit das zweite Betriebsmittel 7 auch die von dem Gateway 6, welcher als Server arbeitet, abgegebenen Datentelegramme empfangen kann, ist das zweite Betriebsmittel 7 entsprechend zu konfigurieren. Dies kann beispielsweise mit einer IEC 61850 konformen Konfigurationsdatei 9 geschehen. Darin sind Information über die Art des Gerätes, wo es sich befindet und welche Daten verarbeitet werden, enthalten. An den Datenbus 1 können weiterhin weitere Betriebsmittel angeschlossen sein, beispielsweise ein drittes Betriebsmittel 8. Das dritte Betriebsmittel 8 entspricht der IEC 61850-Norm und tauscht entsprechend normierte Datentelegramme (zweites Format) über den Datenbus 1 aus. Das von dem dritten Betriebsmittel 8 gesendete Datentelegramm kann dann beispielsweise direkt von dem zweiten Betriebsmittel 7 empfangen und verarbeitet werden. Das dritte Betriebsmittel 8 arbeitet als Server und das zweite Betriebsmittel 7 als Client. Neben einer Vielzahl von IEC 61850 konformen Betriebsmitteln, welche über den Datenbus 1 miteinander kommunizieren, können auch mehrere Betriebsmittel vorgesehen sein, welche nicht mit der IEC 61850 konform sind, das heißt, Betriebsmittel, welche Datentelegramme in einem von dem zweiten Format verschiedenen Format auf den Datenbus einspeisen. Auch für die Umsetzung dieser Datentelegramme kann das Gateway 6 eingesetzt werden. Nach dem Verlassen des Gateways 6 weisen die Datentelegramme jedoch das zweite Format auf. Die von den verschiedenen, nicht IEC 61850 konformen Betriebsmitteln gesandten Formate der Datentelegramme können jeweils alle vom ersten Format sein oder auch verschiedene Formate aufweisen. Gemeinsam ist ihnen jedoch, dass sie alle über den Datenbus 1 übertragen werden. Der im Wesentlichen zur Übertragung von IEC 61850 konformen Datentelegrammen des zweiten Formates vorgesehene Datenbus wird von nicht kompatiblen IEC 61850-Datentelegrammen eines ersten Formates oder weiterer Formate mitgenutzt.

Der Datenbus kann beispielsweise unter Nutzung von Elektroenergieübertragungsleitungen die unter Wechselspannung stehen ausgebildet werden. Die Datentelegramme werden dann auf die Grundfrequenz des Wechselspannungsnetzes aufmoduliert. Dadurch sind keine weiteren Datenleitungen nötig. Neben der Verwendung von Ethernet-Netzwerken als Datenbus können auch weitere Bussysteme zur Anwendung kommen.

## Patentansprüche

1. Verfahren zur Übertragung von Daten über einen Datenbus (1), wobei
- von einem ersten Betriebsmittel (2) Daten mittels eines Datentelegramms eines ersten Formates (x) in den Datenbus (1) eingespeist werden,
- das Datentelegramm des ersten Formates (x) von einem Gateway (6) aus dem Datenbus (1) empfangen wird,
- das Gateway (6) das Datentelegramm des ersten Formates (x) in ein Datentelegramm eines zweiten Formates (IEC 61850) umsetzt
**dadurch gekennzeichnet, dass**
- das Gateway (6) das im zweiten Format (IEC 61850) vorliegende, umgesetzte Datentelegramm in den Datenbus (1) einspeist.

2. Verfahren nach Anspruch 1,
**dadurch gekennzeichnet, dass**
das nach der Umsetzung in den Datenbus (1) eingespeiste Datentelegramm des zweiten Formates (IEC 61850) von zumindest einem zweiten Betriebsmittel (7) empfangen und verarbeitet wird.

3. Verfahren nach Anspruch 1 oder 2,
**dadurch gekennzeichnet, dass**
dem ersten Betriebsmittel (2) ein Medienumsetzer (4) zugeordnet ist, welcher eingehende Daten einer Punkt zu Punkt Übertragungsstrecke (5) in ein busfähiges Datentelegramm des ersten Formates (x) umwandelt.

4. Verfahren nach einem der Ansprüche 1 bis 3,
**dadurch gekennzeichnet, dass**
das Gateway (6) als Server eingerichtet ist.

5. Verfahren nach einem der Ansprüche 1 bis 4,
**dadurch gekennzeichnet, dass**
das zweite Betriebsmittel (7) als Client eingerichtet ist.

6. System zur Übertragung von Daten, wobei
das System einen Datenbus (1) aufweist, in welchen ein erstes Betriebsmittel (2) ein Datentelegramm eines ersten Formates (x) einspeist, dass
das System ein Gateway (6) aufweist, welches das Datentelegramm empfängt und in ein Datentelegramm eines zweiten Formates (IEC 61850) umsetzt,
**dadurch gekennzeichnet, dass**
das Gateway (6) das Datentelegramm des zweiten Formates (IEC 61850) in den Datenbus (1) einspeist und wobei das Datentelegramm des zweiten Formates (IEC 61850) von einem zweiten Betriebsmittel (7) empfangen wird.

7. System nach Anspruch 6,
**dadurch gekennzeichnet, dass**
das Gateway (6) ein Server ist.

## Claims

1. Method for transmitting data via a data bus (1), wherein
- data is fed from a first operating means (2) by means of a data telegram of a first format (x) into the data bus (1),
- the data telegram of the first format (x) is received by a gateway (6) from the data bus (1),
- the gateway (6) converts the data telegram of the first format (x) into a data telegram of a second format (IEC 61850)
**characterised in that**
- the gateway (6) feeds the converted data telegram present in the second format (IEC 61850) into the data bus (1).

2. The method as claimed in claim 1,
**characterised in that**
the data telegram of the second format (IEC 61850) fed into the data bus (1) following conversion is received and processed by a least one second operating means (7).

3. The method as claimed in claim 1 or 2,
**characterised in that**
a media converter (4) is assigned to the first operating means (2), said media converter converting incoming data of a point-to-point transmission path (5) into a bus-compatible data telegram of the first format (x).

4. The method as claimed in one of claims 1 to 3,
**characterised in that**
the gateway (6) is set up as a server.

5. Method according to one of claims 1 to 4,
**characterised in that**
the second operating means (7) is set up as a client.

6. System for transmitting data, wherein the system comprises a data bus (1), into which a first operating means (2) feeds a data telegram of a first format (x), such that the system comprises a gateway (6), which receives the data telegram and converts the same into a data telegram of a second format (IEC 61850),
**characterised in that**
the gateway (6) feeds the data telegram of the second format (IEC 61850) into the data bus (1) and wherein the data telegram of the second format (IEC 61850) is received by a second operating means (7).

7. System according to claim 6,
**characterised in that**
the gateway (6) is a server.

## Revendications

1. Procédé de transmission de données par l'intermédiaire d'un bus ( 1 ) de données, dans lequel
- on injecte par un premier moyen ( 2 ) de fonctionnement des données dans le bus ( 1 ) de données au moyen d'un télégramme de données d'un premier format ( X ),
- le télégramme de données du premier format ( X ) est reçu du bus ( 1 ) de données par une gate-way ( 6 ),
- la gate-way ( 6 ) transforme le télégramme de données du premier format ( X ) en un télégramme de données d'un deuxième format ( IEC 61850 ), **caractérisé en ce que** la gate-way
- injecte dans le bus ( 1 ) de données le télégramme transformé présent dans le deuxième format ( IEC 61850 ).

2. Procédé suivant la revendication 1,
**caractérisé en ce que**
le télégramme de données du deuxième format ( IEC 61850 ) injecté dans le bus ( 1 ) de données après la transformation est reçu et traité par au moins un deuxième moyen ( 7 ) de fonctionnement.

3. Procédé suivant l'une des revendications 1 ou 2,
**caractérisé en ce que**
au premier moyen ( 2 ) de fonctionnement est associé un convertisseur ( 4 ) de support, qui transforme des données entrantes d'une section ( 5 ) de transmission point à point en un télégramme de données du premier format ( X ) qui convient à un bus.

4. Procédé suivant l'une des revendications 1 à 3,
**caractérisé en ce que**
la gate-way ( 6 ) est agencée en serveur.

5. Procédé suivant l'une des revendications 1 à 4,
**caractérisé en ce que**
la deuxième moyen ( 7 ) de fonctionnement est agencé en client.

6. Système de transmission de données, dans lequel
le système a un bus ( 1 ) de données, dans lequel un premier moyen ( 2 ) de fonctionnement injecte un télégramme de données d'un premier format ( X ), dans lequel
le système a une gate-way ( 6 ) qui reçoit le télégramme de données, et le transforme en un télégramme de données d'un deuxième format ( IEC 61850 ),
**caractérisé en ce que**
la gate-way ( 6 ) injecte le télégramme de données du deuxième format ( IEC 61850 ) dans le bus ( 1 ) de données et dans lequel le télégramme de données du deuxième format ( IEC 61850 ) est reçu par un deuxième moyen ( 7 ) de fonctionnement.

7. Système suivant la revendication 6,
**caractérisé en ce que** la gate-way ( 6 ) est un serveur.
